# EUROPEAN PATENT APPLICATION

(11) **EP 1 457 978 A2**
(43) Date of publication of application: **15.09.2004**
(21) Application number: 04251403.4
(22) Date of filing: 11.03.2004
(51) Int. Cl.: G11B 7/24

(54) **Information medium**

(30) Priority: 13.03.2003 JP 2003067750; 13.03.2003 JP 2003067751
(71) Applicant: Fuji Photo Film Co., Ltd., Kanagawa (JP)
(72) Inventor: Usami, Yoshihisa, Odawara-shi Kanagawa (JP); Kobayashi, Takashi, Fujinomiya-shi Shizuoka-ken (JP); Sugisaki, Tsutomu, Odawara-shi Kanagawa (JP); Ose, Takayoshi, Odawara-shi Kanagawa (JP)
(74) Representative: Calamita, Roberto

(57) **Abstract**

The present invention provides an information medium comprising a substrate having successively disposed thereon an undercoat layer and a colorant receiving layer, wherein the colorant receiving layer comprises at least fine particles, polyvinyl alcohol, a boron compound and a mordant, and the diffusion reflectance of the undercoat layer is 10% or more; and an information medium comprising a substrate having disposed thereon a colorant receiving layer, wherein the colorant receiving layer is formed by successively applying a first coating solution and a second coating solution which are different from each other.

## Description

### BACKGROUND OF THE INVENTION

### Field of the invention

The present invention relates to an information medium having a colorant receiving layer.

### Description of the Related Art

Widely accepted market standards for information media include CDs (compact discs) and DVDs (digital versatile discs) .

As CDs, there are CD-ROMs, in which are used exclusively for reading, CD-Rs, which can record information only once, and CD-RWs, in which information can be rewritten any number of times.

A CD-ROM has, for example, a structure in which bit rows having a track pitch of 1.6 µm are formed in a transparent substrate having a diameter of 120 mm and a thickness of 1.2 mm, and a recording capacity of about 650 M bytes. The linear velocity thereof is set to a constant value of 1.2 to 1.4 m/s and a laser ray having a wavelength of 770 to 790 nm is radiated thereto to reproduce information.

In the same manner as CDs, DVDs are classified into DVD-ROMs, DVD-Rs, and DVD-RWs.

A DVD-ROM has a recording density about 6 to 8 times larger than that of a CD. An example of the structure thereof is a structure in which two substrates each having a thickness of about 0. 6 mm are adhered to each other. Pits are formed therein at a track pitch of 0.74 µm, and the linear velocity thereof is set to a constant value of about 3.5 m/s and a laser ray having a wavelength of 635 to 650 nm is radiated thereto to reproduce information.

In recent years, an information medium has been developed wherein a colorant receiving layer is formed on the surface opposite to the information-reproducing surface of such a CD or DVD, so as to print images with an ink-jet printer (see, for example, Japanese Patent Application Laid-Open (JP-A) No. 2002-245671). As a colorant receiving layer in such an information medium, ultraviolet ray curable resin is generally used. However, the colorant receiving layer made of ultraviolet ray curable resin has a problem in that high image quality cannot be obtained as compared with ink-jet recording sheets. Additionally, ultraviolet ray curable resin causes skin irritation, and has a problem in material safeness. Furthermore, ultraviolet ray curable resin has handling problems in that the resin is required to be stored in a dark room at room temperature, that the life span thereof is short, and that the resin has an unpleasant odor which adversely affects the working environment.

An optical recording medium is disclosed wherein no ultraviolet ray curable resin is used but a single coating solution is used and dried to form a colorant receiving layer (see, for example, JP-A No. 2002-133722). However, it is difficult to add a crosslinking agent to the colorant receiving layer in this optical recording medium, and thus surface hardness cannot be obtained with any crosslinking agent. That is, for this type of optical recording medium, it is difficult to obtain a balance between image quality and strength.

Accordingly, there is a need for an information medium which is highly safe in handling, and has a colorant receiving layer in which a high-quality image can be recorded.

Furthermore, there is also a need for an information medium comprising a colorant receiving layer having sufficient surface strength.

### SUMMARY OF THE INVENTION

A first aspect of the present invention is to provide an information medium comprising a substrate having successively disposed thereon an undercoat layer and a colorant receiving layer, wherein the colorant receiving layer comprises at least fine particles, polyvinyl alcohol, a boron compound and a mordant, and the diffusion reflectance of the undercoat layer is 10% or more.

A second aspect of the invention is to provide an information medium comprising a substrate having disposed thereon a colorant receiving layer, wherein the colorant receiving layer is formed by successively applying a first coating solution and a second coating solution which are different from each other.

### DETAILED DESCRIPTION OF THE INVENTION

A first aspect of the present invention provides an information medium comprising a substrate having successively disposed thereon an undercoat layer and a colorant receiving layer, wherein the colorant receiving layer comprises at least fine particles, polyvinyl alcohol, a boron compound, and a mordant, and the diffusion reflectance of the undercoat layer is 10% or more.

A second aspect of the invention provides an information medium comprising a substrate having disposed thereon a colorant receiving layer, wherein the colorant receiving layer is formed by successively applying a first coating solution and a second coating solution which are different from each other.

The information medium of the invention can be applied to a magnetic medium, an optical medium, a semiconductor medium, and other media. A form thereof may be a disc form, a tape form, or a cartridge reception form. In the case of the cartridge reception form, it is preferable that the medium is removable. A disc form optical information recording medium (optical disc) is particularly preferable.

In the case of the optical disc, the disc may be any one of a CD, a DVD, an optical disc in which information is recorded with a bluish purple laser, and other discs.

In the case of the medium in which information is recorded with a bluish purple laser, the disc is classified into an adhesion type such as a DVD, and a type in which a recording layer and a cover layer are formed on a 1.1 mm substrate and a laser ray is radiated onto the cover layer. In the invention, the disc may be either one of the two types.

The position where the colorant receiving layer is formed is basically on the side opposite to the surface onto which a laser ray is radiated. However, the colorant receiving layer can be formed in any area other than the laser-radiated area on the side where a laser ray is radiated.

The type of the information medium of the invention may be any one of a ROM type, a rewritable type, and a write once type. The medium is preferably a write once type.

The information medium of the invention preferably further comprises a compound represented by the following formula (1) and/or a compound represented by the following formula (2) in the colorant receiving layer:

RO(CH₂CH₂O)ₙH Formula (1)

wherein R represents a saturated hydrocarbon group having 1 to 12 carbon atoms, an unsaturated hydrocarbon group having 1 to 12 carbon atoms, a phenyl group or an acyl group, and n is an integer of 1 to 3, and

RO(CH₂CH (CH₃)O)ₙH Formula (2)

wherein R represents a saturated hydrocarbon group having 1 to 12 carbon atoms, an unsaturated hydrocarbon group having 1 to 12 carbon atoms, a phenyl group or an acyl group, and n is an integer of 1 to 3.

When the compound represented by formula (1) and/or the compound represented by formula (2) is/are contained in the colorant receiving layer, the dry shrinkage of the colorant receiving layer can be suppressed when a three-dimensional network structure (porous structure) is formed. The dry shrinkage of the colorant receiving layer can be suppressed since the compounds represented by formulae (1) and (2) appropriately hinder the formation of hydrogen bonds between silanol groups of a gas phase process silica surface and hydroxyl groups of the polyvinyl alcohol. This prevents cracks from forming in the colorant receiving layer when the three-dimensional network structure is formed, and improves the production yield or quality of the information media.

By using fine particles, polyvinyl alcohol, a boron compound and a mordant together in the colorant receiving layer, improvements can be made in glossiness, ink absorption, resistance against blurring with the passage of time, light fastness, printed-image density (maximum density), and so on.

### [Colorant Receiving Layer]

As described above, the colorant receiving layer in the first aspect of the invention comprises at least fine particles, polyvinyl alcohol, a boron compound and a mordant, and may further comprise a compound represented by formula (1) and/or a compound represented by formula (2), various additives, and others.

The colorant receiving layer in the second aspect of the invention is formed by successively applying a first coating solution and a second coating solution which are different from each other. It is preferable that the first coating solution comprises fine particles and polyvinyl alcohol, and the second coating solution comprises a boron compound and a mordant. The first and second coating solutions may further comprise various additives. The first coating solution may comprise at least a boron compound and a mordant, and the second coating solution may comprise at least fine particles and polyvinyl alcohol. The first coating solution preferably comprises a compound represented by formula (1) and/or a compound represented by formula (2).

### Compounds Represented by Formulae (1) and (2)

The compounds represented by formulae (1) and (2) are high boiling point solvents.

RO(CH₂CH₂O)ₙH Formula (1)

wherein R represents a saturated hydrocarbon group having 1 to 12 carbon atoms, an unsaturated hydrocarbon group having 1 to 12 carbon atoms, a phenyl group or an acyl group, and n is an integer of 1 to 3, and

RO(CH₂CH(CH₃)O)ₙH Formula (2)

wherein R represents a saturated hydrocarbon group having 1 to 12 carbon atoms, an unsaturated hydrocarbon group having 1 to 12 carbon atoms, a phenyl group or an acyl group, and n is an integer of 1 to 3.

In formulae (1) and (2), R represents a saturated hydrocarbon group having 1 to 12 carbon atoms, an unsaturated hydrocarbon group having 1 to 12 carbon atoms, a phenyl group or an acyl group, and preferably represents a saturated hydrocarbon group having 1 to 4 carbon atoms.

The saturated hydrocarbon group as R has 1 to 12 carbon atoms, preferably 1 to 8 carbon atoms and more preferably 1 to 4 carbon atoms. Examples of the saturated hydrocarbon group include alkyl groups and alicyclic hydrocarbon groups. The saturated hydrocarbon group may be substituted with a substituent. Specific examples of the saturated hydrocarbon group include methyl, ethyl, propyl, butyl and hexyl groups. Methyl, ethyl, propyl and butyl groups are preferable.

The unsaturated hydrocarbon group has 1 to 12 carbon atoms, preferably 1 to 8 carbon atoms, and more preferably 1 to 4 carbon atoms. Examples of the unsaturated hydrocarbon group include alkenyl groups and alkynyl groups. The unsaturated hydrocarbon group may be substituted with a substituent. Specific examples of the unsaturated hydrocarbon group include vinyl, allyl, ethynyl, 1,3-butadieneyl, and 2-propynyl groups. An allyl group is preferable.

The above-mentioned acyl group is preferably an acyl group having 1 to 8 carbon atoms, and more preferably an acyl group having 1 to 4 carbon atoms. The acyl group may be substituted with a substituent. Examples of the acyl group include acetyl, propionyl, butyryl, and valeryl groups. A butyryl group is preferable.

In formulae (1) and (2), n is an integer of 1 to 3, and is preferably 2 or 3.

The compound represented by formula (1) or (2) is preferably a water-soluble compound. The wording "water-soluble" means that the solubility of the compound in water is 1% by mass or more. Specific examples of the compounds represented by formulae (1) and (2) include ethylene glycol monomethyl ether, ethylene glycol monoethyl ether, ethylene glycol monobutyl ether, ethylene glycol monohexyl ether, ethylene glycol monoallyl ether, ethylene glycol monophenyl ether, diethylene glycol monomethyl ether, diethylene glycol monoethyl ether, diethylene glycol monobutyl ether, diethylene glycol monohexyl ether, diethylene glycol monododecyl ether, triethylene glycol monomethyl ether, triethylene glycol monoethyl ether, triethylene glycol monobutyl ether, propylene glycol monomethyl ether, propylene glycol monoethyl ether, and propylene glycol monobutyl ether. Diethylene glycol monobutyl ether and triethylene glycol monobutyl ether are preferable.

It is sufficient that the colorant receiving layer contains at least one selected from compounds represented by formula (1) and compounds represented by formula (2). Accordingly, the colorant receiving layer may contain one or more selected from compounds represented by formula (1) or one or more selected from compounds represented by formula (2), or may contain a combination of compounds represented by formula (1) and formula (2) . When a compound [x] represented by formula (1) and a compound [y] represented by formula (2) are used together, the blend ratio (mass ratio) of the compound [x] to the compound [y], which is not particularly limited, is preferably from 100:1 to 100:100, and more preferably from 100:10 to 100:50. The total amount of compounds represented by formulae (1) and (2), which are contained in the colorant receiving layer, is preferably from 0.1 to 5.0 g/m², and more preferably from 0.2 to 3.0 g/m².

The colorant receiving layer in the invention may contain the following as long as the effects of the invention are not impaired: various known surfactants to improve the coating suitability and the surface quality thereof, a known surfactant having ion conductivity to suppress frictional electrification or exfoliation electrification of the surface, an antioxidant or an ultraviolet absorbent to improve light discoloration thereof, and a sulfur-containing compound or the like to improve ozone discoloration. Fine particles

Examples of the particles include gas phase process silica, pseudo-boehmite, aluminum oxide, titanium dioxide, barium sulfate, calcium silicate, zeolite, kaolinite, halloysite, mica, talc, calcium carbonate, magnesium carbonate, calcium sulfate, and boehmite particles. Gas phase process silica, pseudo-boehmite, and aluminum oxide are particularly preferable.

### - Gas Phase Process Silica-

Usually, silica fine particles are roughly classified into wet process particles and dry process (gas phase process) particles depending on the production process thereof. The main current of the wet process is a process of generating active silica by acid-decomposition of a silicate and then moderately polymerizing the active silica so as to be aggregated and precipitated, thereby yielding hydrous silica. On the other hand, the main current of the gas phase process is a process of hydrolyzing silicon halide in a gas phase at a high temperature (flame hydrolysis), or a process of heating and reducing silica sand and coke by arc in an electric furnace to gasify them, and oxidizing the gas by air, thereby yielding anhydrous silica (arc process) . The "gas phase process silica" means anhydrous silica fine particles obtained by this gas phase process.

The gas phase process silica is different from the hydrous silica in the density of silanol groups in the surface, the presence or absence of voids, and other factors, and has a nature different from that of the hydrous silica. The gas phase process silica is suitable for forming a three-dimensional structure having a high porosity. The reason for this is unclear, but is presumed as follows: in the case of the hydrous silica, the density of silanol groups in the surface of fine particles made of the silica is as large as 5 to 8 per nm² and the silica fine particles aggregate easily into a high density; on the other hand, in the case of the gas phase process silica, the density of silanol groups in the surface of fine particles made of the silica is as small as 2 to 3 per nm² so that the silica fine particles flocculate into a low density to have a structure having a high porosity.

The gas phase process silica has the following features: the silica has high ink-absorptivity and ink-holding efficiency since the specific surface area thereof is particularly large , and further the silica can give transparency to the colorant receiving layer when dispersing the silica to have an appropriate particle size since the silica has a low refractive index; therefore, high color density and good color-developability can be obtained.

The average primary particle size of the gas phase process silica is preferably 30 nm or less, more preferably 20 nm or less, still more preferably 10 nm or less, and most preferably from 3 to 10 nm. Since the particles of the gas phase process silica adhere easily to each other by hydrogen bonds based on silanol groups, a structure having a large porosity can be formed when the average primary particle size is 30 µm or less. As a result, the ink-absorptivity of the information medium can be improved effectively.

Different inorganic pigment fine particles may be used together with the gas phase process silica. Examples of the different particles include hydrous silica, colloidal silica, titanium dioxide, barium sulfate, calcium silicate, zeolite, kaolinite, halloysite, mica, talc, calcium carbonate, magnesium carbonate, calcium sulfate, boehmite, and pseudo-boehmite particles. When the different inorganic pigment fine particles are used together with the gas phase process silica, the content of the gas phase process silica in all of the inorganic pigment fine particles is preferably 50% or more, and more preferably 70% by mass or more.

### - Pseudo-Boehmite-

Pseudo-boehmite is a compound which is represented by Al₂O₃ · xH₂O (1<x<2) and a lamellar compound in which the (0 2 0) crystal face thereof is generally a giant plane. The lattice constant d thereof is 0.67 nm. Pseudo-boehmite has a structure in which an excessive amount of water is contained between layers along the (0 2 0) face. Pseudo-boehmite absorbs ink sufficiently and causes the ink to be sufficiently fixed, so as to improve the absorptivity of the ink and resistance against blurring with the passage of time.

It is preferable to use sol-form pseudo-boehmite (pseudo-boehmite sol) as starting material since a flat and smooth layer can easily be made therefrom.

The primary average particle size of pseudo-boehmite is preferably 50 nm or less, more preferably 30 nm or less, and still more preferably from 3 to 20 nm. When the average primary particle size of pseudo-boehmite is within the above-mentioned range, a structure having a large porosity can be formed and further the ink-absorptivity of the colorant receiving layer can be improved. The average primary particle size can be measured, for example, with an electron microscope. The BET specific surface area of pseudo-boehmite is preferably from 40 to 500 m², and more preferably from 200 to 500 m².

The aspect ratio of pseudo-boehmite is preferably from 3 to 10. As for the void structure of pseudo-boehmite, the average void radius thereof is preferably from 1 to 30 nm, and more preferably from 2 to 15 nm. The void volume thereof is preferably from 0.3 to 2.0 ml/g (cc/g) , and more preferably from 0.5 to 1.5 ml/g (cc/g). The void radius and the void volume are measured by the nitrogen absorption/desorption method using, for example, a gas absorption/desorption analyzer (such as "Omnisorp 369" (trade name) manufactured by Beckman Coulter, Inc.).

Pseudo-boehmite is preferably used in a state of being dispersed in an aqueous solvent. In this case, the content of pseudo-boehmite in the dispersion is preferably 60% or less, more preferably from 5 to 60%, and still more preferably from 10 to 50% by mass.

Particularly when the content is within the above-mentioned range, pseudo-boehmite can be dispersed effectively. For example, it is possible to suppress effectively an increase in the viscosity or gelatinization caused by shortened distance between the pseudo-boehmite particles when the particles are dispersed.

The content ratio between gas phase silica (S) and pseudo-boehmite (A) used together therewith (S:A) is preferably from 95 :5 to 5: 95, more preferably from 80:20 to 20: 80, and still more preferably from 70:30 to 30:70.

When gas phase silica (S) and pseudo-boehmite (A) are used together within the above-mentioned ranges of the content ratio, it is possible to effectively prevent all inks from blurring with the passage of time independently of color hues thereof. Even when a multicolor image is formed, this image can be formed into a sustainable vivid image having a high resolution.

### - Aluminum Oxide-

Examples of aluminum oxide in the invention include anhydrous alumina species such as α-alumina, δ-alumina, θ-alumina and χ-alumina, and active aluminum oxide. Among these examples, δ-alumina is preferable. From the viewpoint of production process of alumina, preferable are alumina fine particles produced by gas phase process, that is, gas phase process alumina, which is obtained by hydrolyzing a gaseous metal chloride in the presence of water generated at the time of oxyhydrogen reaction at a temperature typical in such a reaction, since the alumina fine particles have large specific surface areas.

Examples of forms of aluminum oxide which can be adopted include fine particles having a given particle size, very fine particles, fine particles, powder, fine power and very fine powder. The average primary particle size thereof is preferably 200 nm or less, more preferably from 5 to 100 nm, and still more preferably from 5 to 20 nm. When the average primary particle size of the alumina fine particles is within the above-mentioned ranges, a structure having a large porosity can be formed and further the ink-absorptivity of the colorant receiving layer can be improved. The average primary particle size can be measured with, for example, an electron microscope.

In the invention, it is preferable to use aluminum oxide in a dispersion state. The aluminum oxide content in the dispersion is preferably 60% by mass or less, more preferably from 5 to 60% by mass, and still more preferably from 10 to 50% by mass. When the aluminum content is within these ranges, aluminum oxide can be more effectively dispersed. When the aluminum oxide content in the dispersion is 60% or less by mass, it is possible to suppress effectively an increase in the viscosity or gelatinization caused by shortened distance between the aluminum oxide particles in the dispersion. An aggregation inhibitor may be added to the dispersion, examples of the inhibitor including cationic polymers having a primary, secondary or tertiary amino group, a salt thereof, or a quaternary ammonium salt group. The amount of the added aggregation inhibitor is preferably from 1 to 10% by mass, and more preferably from 1 to 5% by mass of the aluminum oxide particles. If this amount is less than 1% by mass, dispersibility may be poor. If the amount is more than 10% by mass, the color density of an image printed into the colorant receiving layer may fall, which is unpreferable.

The solid content in the colorant receiving layer comprising aluminum oxide is preferably 50% or more, and more preferably 60% by mass or more. When the content is more than 60% by mass, a better porous structure can be formed so that the colorant receiving layer favorably has sufficient ink-absorptivity. The solid content in the colorant receiving layer comprising aluminum oxide means the solid content calculated from components other than water in the composition of which the colorant receiving layer is formed.

In the invention, aluminum oxide may be used together with other particles. In this case, the content of aluminum oxide in the invention in all of the fine particles is preferably 30% by mass or more, and more preferably 50% by mass or more.

The other fine particles may be organic fine particles or inorganic fine particles. Inorganic fine particles are preferable from the viewpoint of ink-absorptivity and image stability. Polyvinyl Alcohol

Examples of the polyvinyl alcohol include polyvinyl alcohol (PVA), cation-modified polyvinyl alcohol, anion-modified polyvinyl alcohol, silanol-modified polyvinyl alcohol, and other polyvinyl alcohol derivatives. The polyvinyl alcohols may be used alone or in combination of two or more thereof.

The above PVA has, in the structural unit thereof, a hydroxyl group. This hydroxyl group and a silanol group on the surface of the silica fine particle form a hydrogen bond to facilitate production of a three-dimensional network structure containing, as its chain unit, secondary particles obtained from the silica fine particles. Formation of the three-dimensional network structure is thought to enable formation of the colorant receiving layer into a porous structure having high porosity.

In ink-jet recording, the porous colorant receiving layer obtained as described above rapidly absorbs ink by capillarity so that dots with no ink blur and good circularity can be formed.

The polyvinyl alcohol content is preferably from 9 to 40% by mass, and more preferably from 12 to 33% by mass of all solid contents in the colorant receiving layer in order to prevent a fall in the strength of the film or cracks in the dried film, resulting from an excessively small content, and to prevent a fall in the ink-absorptivity, resulting from the voids being easily clogged with resin by an excessively large amount such that the porosity decreases.

The PVA preferably has a saponification degree of 70 to 99%, and more preferably has a saponification degree of 80 to 99%.

The polyvinyl alcohol may be used together with a different water-soluble resin, examples of which include polyvinyl acetal, cellulose resins [such as methylcellulose (MC), ethylcellulose (EC), hydroxyethylcellulose (HEC), and carboxymethylcellulose (CMC)], chitins, chitosans, starch; resins having an ether bond [such as polyethylene oxide (PEO), polypropylene oxide (PPO), polyethylene glycol (PEG) and polyvinyl ether (PVE)]; resins having an amide group or bond [suchaspolyacrylamide (PAAM) and polyvinyl pyrrolidone (PVP)], resins having a carboxylic group as an dissociating group [such as polyacrylic acid salts, maleic resin, alginic acid salt and gelatin] . When the polyvinyl alcohol is used together with a different water-soluble resin, the polyvinyl alcohol content in all of the water-soluble resins is preferably 50% by mass or more, and more preferably 70% by mass or more.

### -Content Ratio between the Fine Particles and the Polyvinyl Alcohol-

The content ratio between the fine particles (all inorganic pigment fine particles when other inorganic pigment fine particles are used together: i) and the polyvinyl alcohol (all water-soluble resins when the different water-soluble resins are used together: p) , referred to as the PB ratio (i:p) , (that is, the mass of the fine particles to one part by mass of the polyvinyl alcohol) produces a large effect on the film structure of the colorant receiving layer. In other words, the larger the PB ratio, the larger the porosity, the void volume, and the surface area (per unit area).

Specifically, the PB ratio (i:p) is preferably from 1.5:1 to 10:1 in order to prevent a fall in the strength of the film or cracks in the dried film, resulting from an excessively large PB ratio, and to prevent a fall in the ink-absorptivity, resulting from the voids being easily clogged with resin by an excessively small PB ratio such that the porosity decreases.

Since stress may be applied to the information medium when the medium passes through a carrier system of an ink- j et printer, it is necessary that the colorant receiving layer has sufficient film strength. Furthermore, in order to prevent cracks or exfoliation of the colorant receiving layer when the information medium is cut into a sheet form, it is necessary that the colorant receiving layer has sufficient film strength.

In this case, the PB ratio is preferably not more than 5: 1, and is preferably not less than 2: 1 in order to also maintain high-speed ink-absorptivity in the ink-jet printer.

For example, in the case of applying, onto a substrate, a coating solution wherein anhydrous silica fine particles having an average primary particle size of 20 nm or less and a water-soluble resin are completely dispersed in an aqueous solution at a PB ratio of 2:1 to 5:1, and then drying the resultant coating layer, a three-dimensional network structure is formed, containing, as its chain unit, secondary particles obtained from the silica fine particles. This enables easy formation of a transparent porous film having an average porous diameter of 30 nm or less, a porosity of 50 to 80%, a void specific volume of 0.5 ml/g or more, and a specific surface area of 100 m²/g or more.

### Boron Compound

The colorant receiving layer in the information medium of the first aspect of the invention is a layer which is obtained from an coating layer (porous layer) comprising the fine particles and the water-soluble resin and further comprising a boron compound as a crosslinking agent with which the polyvinyl alcohol can be crosslinked, and which is cured by crosslinking reaction between the boron compound and the polyvinyl alcohol.

It is preferable that the addition of the boron compound is performed at the same time that above-mentioned coating solution for forming the porous colorant receiving layer (colorant receiving layer coating solution or first coating solution) is applied, or before the coating layer formed by applying the colorant receiving layer coating solution or the first coating solution exhibits a decreasing drying rate. This operation enables effective prevention of cracks from forming while the coating layer is dried. That is, a boron compound solution (crosslinking agent solution or second coating solution) permeates into the coating layer at the same time that the above-mentioned coating solution is applied, or before the coating layer exhibits a decreasing drying rate. As a result, the boron compound solution reacts immediately with the polyvinyl alcohol inside the coating layer to gelatinize (cure) the polyvinyl alcohol. In this way, the film strength of the coating layer immediately improves to a great extent.

In the first aspect of the invention, it is also preferable to use a method of: applying, onto a surface of a substrate, a coating solution obtained by adding the solution comprising the polyvinyl alcohol and the compound(s) represented by formula (1) and/or formula (2) (first solution) to an aqueous dispersion comprising the gas phase process silica and a dispersing agent and then dispersing the solid components again; and adding, to the coating layer formed by the application, a solution comprising a mordant (second solution) at the same time that the first solution is applied or before the above-mentioned coating layer exhibits a decreasing drying rate while drying the coating layer. When this method is used, it is preferable to add the boron compound to both the first solution added to the coating solution and the second solution added afterwards.

The boron compound used as the crosslinking agent enables rapid crosslinking of the polyvinyl alcohol. Examples thereof include borax, boric acid, borates (such as orthoborates, InBO₃, ScBO₃, YBO₃, LaBO₃, Mg₃ (BO₃)₂ and Co₃ (BO₃)₂) , diborates (such as Mg₂B₂O₅ and Co₂B₂O₅) , metaborates (such as LiBO₂, Ca (BO₂) ₂, NaBO₂ and KBO₂), tetraborates (such as Na₂B₄O₇·10H₂O), pentaborates (such as KB₅O₈·4H₂O, Ca₂B₆O₁₁· 7H₂O, CsB₅O₅) , glyoxal, melamine/formaldehyde (such as methylolmelamine, alkylated methylolmelamine) , methylol urea, resol resin, polyisocyanate, and epoxy resin.

Among theses examples, borax, boric acid and borates are preferable since they immediately cause crosslinking reaction. Boric acid is more preferable.

When the polyvinyl alcohol is used together with gelatin, the following compounds known as film hardeners for gelatin can be used together with the boron compound.

Examples thereof include aldehyde compounds such as formaldehyde, glyoxal and glutar aldehyde; ketone compounds such as diacetyl and cyclopentanedione; active halogen compounds such as bis(2-chloroethylurea)-2-hydroxy-4,6-dichloro-1,3,5-triazine and 2,4-dichloro-6-S-triazine sodium salt; active vinyl compounds such as divinylsulfonic acid, 1,3-vinylsulfonyl-2-propanol, N,N'-ethylenebis(vinylsulfonylacetamide) and 1,3,5-triacryloylhexahydro-S-triazine; N-methylol compounds such as dimethylolurea and methyloldimethylhydantoin; isocyanate compounds such as 1,6-hexamethylene diisocyanate; adirizine compounds described in U.S. Patent Nos. 3,017,280 and 2,983,611; carboxyimide compounds described in U.S. Patent No. 3,100,704; epoxy compounds such as glycerol triglycidyl ether; ethyleneimino compounds such as 1,6-hexamethylene-N,N'-bisethyleneurea; halogenated carboxyaldehyde compounds such as mucochloroic acid and mucophenoxychloroic acid; dioxane compounds such as 2,3-dihydroxydioxane; chromium alum; potassium alum; zirconium sulfate; and chromium acetate. When the boron compound is used together with a different crosslinking agent, the boron compound content in all of the crosslinking agents is preferably 50% by mass or more, and more preferably 70% by mass or more.

The boron compounds may be used alone or in combination of two or more thereof.

When the boron compound is added, the solution thereof is prepared by dissolving the boron compound into water and/or an organic solvent.

The concentration of the boron compound in the boron compound solution is preferably from 0.05 to 10% by mass, and more preferably from 0.1 to 7% by mass of the boron compound solution.

The solvent in the boron compound solution is generally water, and may be an aqueous mixture solvent containing water and an organic solvent miscible with water.

The organic solvent is any one of organic solvents in which the boron compound can be dissolved. Examples thereof include alcohols such as methanol, ethanol, isopropyl alcohol and glycerin; ketones such as acetone and methyl ethyl ketone; esters such as methyl acetate and ethyl acetate; aromatic solvents such as toluene; ethers such as tetrahydrofuran; and halogenated hydrocarbon solvents such as dichloromethane.

### Mordant

It is preferable that the colorant receiving layer of the invention contains a mordant in order to further improve water resistance of a formed image and the resistance thereof against blurring with the passage of time.

The mordant is preferably a cationic polymer (cationic mordant). By incorporating the mordant into the colorant receiving layer, the mordant interacts with liquid ink containing an anionic dye as a dye to stabilize the dye.

As a result, water resistance and resistance against blurring with the passage of time can be improved.

However, when this mordant is added directly to the coating solution to form the colorant receiving layer, it is feared that aggregation between the mordant and the gas phase process silica having an anionic charge will occur. However, if an independent, different solution is prepared for the mordant and the solution is applied, aggregation of the inorganic pigment fine particles will not occur. In the invention, it is therefore preferable to use the mordant in a state where the mordant is incorporated into a solution different from the solution of the gas phase silica (for example, this different solution being a solution of the crosslinking solution).

The cationic mordant is preferably a polymer mordant having, as a cationic group, a primary, secondary or tertiary amino group, or a quaternary ammonium salt group. A cationic non-polymer mordant may be used.

Preferred examples of the polymer mordant include homopolymers made from a monomer having a primary, secondary or tertiary amino group, a salt thereof, or a quaternary ammonium salt group (mordant monomer), and copolymers and condensation polymers made from the mordant monomer and a different monomer (hereinafter referred to as "non-mordant monomer") . These polymer mordants can be used in the form of either water-soluble polymer or water-dispersible latex particles.

Examples of the monomer (mordant monomer) include trimethyl-p-vinylbenzylammonium chloride, trimethyl-m-vinylbenzylammonium chloride, triethyl-p-vinylbenzylammonium chloride, triethyl-m-vinylbenzylammonium chloride, N,N-dimethyl-N-ethyl-N-p-vinylbenzylammonium chloride, N,N-diethyl-N-methyl-N-p-vinylbenzylammonium chloride, N,N-dimethyl-N-n-propyl-N-p-vinylbenzylammonium chloride, N,N-dimethyl-N-n-octyl-N-p-vinylbenzylammonium chloride, N,N-dimethyl-N-benzyl-N-p-vinylbenzylammonium chloride, N,N-diethyl-N-benzyl-N-p-vinylbenzylammonium chloride, N,N-dimethyl-N-(4-methyl)benzyl-N-p-vinylbenzylammonium chloride, N,N-dimethyl-N-phenyl-N-p-vinylbenzylammonium chloride, trimethyl-p-vinylbenzylammonium bromide, trimethyl-m-vinylbenzylammonium bromide, trimethyl-p-vinylbenzylammonium sulfonate, trimethyl-m-vinylbenzylammonium sulfonate, trimethyl-p-vinylbenzylammonium acetate, trimethyl-m-vinylbenzylammonium acetate, N,N,N-triethyl-N-2-(4-vinylphenyl)ethylammonium chloride, N,N,N-triethyl-N-2-(3-vinylphenyl)ethylammonium chloride, N,N-diethyl-N-methyl-N-2-(4-vinylphenyl)ethylammonium chloride, N,N-diethyl-N-methyl-N-2-(4-vinylphenyl)ethylammonium acetate, N,N-dimethylaminoethyl (meth)acrylate, N,N-diethylaminoethyl (meth)acrylate, N,N-dimethylaminopropyl (meth)acrylate, and N,N-diethylaminopropyl (meth)acrylate; and quaternary salts of N,N-dimethylaminoethyl (meth)acrylamide, N,N-diethylaminoethyl (meth)acrylamide, N,N-dimethylaminopropyl (meth)acrylamide and N,N-diethylaminopropyl (meth)acrylamide with methyl chloride, ethyl chloride, methyl bromide, ethyl bormide, methyl iodide or ethyl iodide, and sulfonates, alkylsulfoantes, acetates and alkylcarboxylates wherein anions of the above-described salts are substituted.

Specific examples thereof include trimethyl-2-(methacryloyloxy)ethylammonium chloride, triethyl-2-(methacryloyloxy)ethylammonium chloride, trimethyl-2-(acryloyloxy)ethylammonium chloride, triethyl-2-(acryloyloxy)ethylammonium chloride, triethyl-3-(methacryloyloxy)propylammonium chloride, triethyl-3-(ethacryloyloxy)propylammonium chloride, trimethyl-2-(methacryloylamino)ethylammonium chloride, triethyl-2-(methacryloylamino)ethylammonium chloride, trimethyl-2-(acryloylamino)ethylammonium chloride, triethyl-2-(acryloylamino)ethylammonium chloride, trimethyl-3-(methacryloylamino)propylammonium chloride, triethyl-3-(methacryloylamino)propylammonium chloride, trimethyl-3-(acryloylamino)propylammonium chloride, triethyl-3-(acryloylamino)propylammonium chloride, N,N-dimethyl-N-ethyl-2-(methacryloyloxy)ethylammonium chloride, N,N-diethyl-N-methyl-2-(methacryloyloxy)ethylammonium chloride, N,N-dimethyl-N-ethyl-3-(acryloylamino)propulammonium chloride, trimethyl-2-(methacryloyloxy)ethylammonium bromide, trimethyl-3-(acryloylamino)propylammonium bromide, trimethyl-2-(methacryloyloxy)ethylammonium sulfonate, and trimethyl-3-(acryloylamino)propylammonium acetate.

Examples of the monomer which can be copolymerized with the above monomer include N-vinylimidazole and N-vinyl-2-methylimidazole.

The non-mordant monomer is a monomer which does not contain any primary, secondary or tertiary amino group, any salt thereof, any quaternary ammonium base group, or any other basic or cationic moiety, and which does not interact with any dye in ink-jet ink or interacts slightly with any dye in ink-jet ink.

Examples of the non-mordant monomer include alkyl (meth)acrylates; cycloalkyl (meth)acrylates such as cyclohexyl (meth) acrylate; aryl (meth)acrylates such as phenyl (meth) acrylate; aralkyl esters such as benzyl (meth) acrylate; aromatic vinyl compounds such as styrene, vinyltoluene and α-methylstyrene; vinyl esters such as vinyl acetate, vinyl propionate and vinyl versatate; allyl esters such as allyl acetate; halogen-containing monomers such as vinylidene chloride and vinyl chloride; vinyl cyanide such as (meth)acrylonitrile; and olefins such as ethylene and propylene.

The above-mentioned alkyl (meth) acrylates are preferably alkyl (meth)acrylates each having an alkyl moiety having 1 to 18 carbon atoms. Examples thereof include methyl (meth)acrylate, ethyl (meth)acrylate, propyl (meth)acrylate, isopropyl (meth)acrylate, n-butyl (meth)acrylate, isobutyl (meth)acrylate, t-butyl (meth)acrylate, hexyl (meth)acrylate, octyl (meth)acrylate, 2-ethylhexyl (meth)acrylate, lauryl (meth)acrylate, and stearyl (meth)acrylate.

Among these examples, methyl acrylate, ethyl acrylate, methyl methacrylate, ethyl methacrylate and hydroxyethyl methacrylate are preferable.

The non-mordant monomers may be used alone or in combination of two or more thereof.

Furthermore, preferable examples of the polymer mordant include polydiallyldimethylammonium chloride, polymethacryloyloxyethyl-β-hydroxyethyldimethylammonium chloride, polyethyleneimine, polyallylamine, polyallylamine hydrochloride, polyamide/polyamine resin, cationized starch, dicyandiamide formalin condensate, polymer of dimethyl-2-hydroxypropylammonium salt, polyamidine, and polyvinylamine.

Regarding the molecular weight of the polymer mordant, the weight-average molecular weight is preferably from 1000 to 200000, and more preferably from 3000 to 60000. When the molecular weight is within the range of 1000 to 200000, the water resistance is sufficient and furthermore a fall in handling suitability, resulting from excessively high viscosity, can be prevented.

Examples of the cationic non-polymer mordant include water-soluble metal salts such as aluminum sulfate, aluminum chloride, polyaluminum chloride, and magnesium chloride.

### Other Components

The colorant receiving layer may contain the following components if necessary: an anti-fading agent, such as various ultraviolet absorbents, antioxidants and singlet oxygen quenchers, for suppressing deterioration in the colorant.

Examples of the ultraviolet absorbents include cinnamic acid derivatives, benzophenone derivatives, and benzotriazolylphenol derivatives. Specific examples thereof include butyl α-cyano-phenylcinnamate, o-benzotriazolephenol, o-benzotriazole-p-chlorophenol, o-benzotriazole-2,4-di-t-butylphenol, and o-benzotriazole-2,4-di-t-octylphenol. A hindered phenol compound may be used as the ultraviolet absorbent. Specifically, a phenol derivative wherein at least one of the 2- and 6-positions thereof is substituted with a branched alkyl group is preferable.

The following may be used: benzotriazole type ultraviolet absorbents, salicylic acid type ultraviolet absorbents, cyanoacrylate type ultraviolet absorbents, oxalic acid anilide type ultraviolet absorbents, and others. These are described in JP-A Nos. 47-10537, 58-111942, 58-212844, 59-19945, 59-46646, 59-109055 and 63-53544, Japanese Patent Application Publication (JP-B) Nos. 36-10466, 42-26187, 48-30492, 48-31255, 48-41572, 48-54965 and 50-10726, and U.S. Patent Nos. 2,719,086, 3,707,375, 3,754,919, and 4,220,711.

A fluorescent whitener may be used as the ultraviolet absorbent, and examples thereof include coumalin type fluorescent whiteners. Specific examples thereof are described in JP-B Nos. 45-4699 and 54-5324.

Examples of the antioxidants are described in EP Laid-Open Nos. 223739, 309401, 309402, 310551, 310552 and 459416, DE Laid-OpenNo. 3435443, JP-ANos. 54-48535, 60-107384, 60-107383, 60-125470, 60-125471, 60-125472, 60-287485, 60-287486, 60-287487, 60-287488, 61-160287, 61-185483, 61-211079, 62-146678, 62-146680, 62-146679, 62-282885, 62-262047, 63-051174, 63-89877, 63-88380, 66-88381, 63-113536, 63-163351, 63-203372, 63-224989, 63-251282, 63-267594, 63-182484, 1-239282, 2-262654, 2-71262, 3-121449, 4-291685, 4-291684, 5-61166, 5-119449, 5-188687, 5-188686, 5-110490, 5-1108437 and 5-170361, JP-B Nos. 48-43295 and 48-33212, and U.S. Patent Nos. 4814262 and 4980275.

Specific examples thereof include 6-ethoxy-1-phenyl-2,2,4-trimethyl-1,2-dihydroquinoline, 6-ethoxy-1-octyl-2,2,4-trimethyl-1,2-dihydroquinoline, 6-ethoxy-1-phenyl-2,2,4-trimethyl-1,2,3,4-tetrahydroquinoline, 6-ethoxy-1-octyl-2,2,4-trimethyl-1,2,3,4-tetrahydroquinoline, nickel cyclohexanoate, 2,2-bis(4-hydroxyphenyl)propane, 1,1-bis(4-hydroxyphenyl)-2-ethylhexane, 2-methyl-4-methoxydiphenylamine, and 1-methyl-2-phenylindole.

The anti-fading agents may be used alone or in combination of two or more thereof. The anti-fading agent may be made into solution, dispersion or emulsion, and may be encapsulated into microcapsules.

The amount of the added anti-fading agent is preferably from 0.01 to 10% by mass of the colorant receiving layer coating solution or the first coating solution.

The colorant receiving layer may contain various inorganic salts in order to heighten the dispersibility of the inorganic pigment fine particles, or may contain acid or alkali as a pH adjuster.

The colorant receiving layer may contain metal oxide fine particles having electronic conductivity in order to suppress the frictional electrification or exfoliation electrification on the surface, or may contain a matting agent in order to decrease the frictional property of the surface. Formation of the Colorant Receiving Layer

As described above, in the first aspect of the invention, it is preferable to introduce a mordant into the colorant receiving layer in the step of adding the above-mentioned crosslinking agent solution. That is, it is preferable to form the colorant receiving layer by the method of applying, onto a substrate, a coating solution comprising a compound represented by formula (1) and/or a compound represented by formula (2) and fine particles and polyvinyl alcohol (colorant receiving layer coating solution); adding, to the resultant coating layer, a solution comprising a boron compound and a mordant (mordant solution) at the same time that the solution is applied or before the formed coating layer exhibits a decreasing drying rate while drying the coating layer; and then crosslinking and curing the coating layer to which the mordant solution is added (WOW method (wet on wet method)). In the second aspect of the invention, the colorant receiving layer is formed by applying a first coating solution and a second coating solution which are different from each other. That is, it is preferable that the colorant receiving layer is formed by the method of applying, onto a substrate, a first coating solution comprising fine particles and polyvinyl alcohol (colorant receiving layer coating solution); adding, to the resultant coating layer, a second solution comprising a boron compound and a mordant (mordant solution) at the same time that the solution is applied or before the formed coating layer exhibits a decreasing drying rate while drying the coating layer; and then crosslinking and curing the coating layer to which the mordant solution is added (WOW method (wet on wet method)). In this method, the pH of the colorant receiving layer coating solution is from 8.0 to 10.0, which exhibits alkalinity.

The colorant receiving layer in the information medium of the invention can be obtained by applying, on a substrate, the colorant receiving layer coating solution and the crosslinking solution, or the first coating solution and the second coating solution simultaneously in a state where a barrier solution made of material which does not react with the crosslinking agent is put between the two solutions (and a mordant is incorporated into at least one of the crosslinking solution and the barrier layer) ; and then curing the resultant coating layers.

As described above, in the invention, the water resistance of the colorant receiving layer can be improved by applying the crosslinking agent (boron compound) and the mordant simultaneously. In other words, if the mordant is added to the colorant receiving layer coating solution or the first coating solution, the mordant may aggregate in the presence of the gas phase process silica having anionic charge on the surface thereof since the mordant is cationic. However, when the mordant-containing solution and the colorant receiving layer coating solution are prepared separately from each other, and the coating solutions are separately applied, a wider range of selection of the mordant can be made since it is unnecessary to take into account aggregation of the gas phase process silica.

In the invention, the colorant receiving layer coating solution or the first coating solution, which comprises a compound represented by (1) and/or a compound represented by formula (2), gas phase process silica (fine particles) and polyvinyl alcohol, can be prepared, for example, as follows.

That is, the coating solution can be prepared by adding gas phase process silica to water (for example, in an amount of 10 to 20% by mass), using a high-speed rotating wet type colloid mill (for example, Cleamix, manufactured by M Technique Co., Ltd.) to disperse the silica, for example, at a high rotating speed of 10000 rpm (preferably 5000 to 20000 rpm) for 20 minutes (preferably 10 to 30 minutes), adding an aqueous solution of polyvinyl alcohol to the dispersion (in such a manner that the mass of polyvinyl alcohol will be about 1/3 of the mass of the gas phase process silica), adding a compound represented by (1) and/or a compound represented by formula (2) thereto, and dispersing the resultant under the same conditions as described above. The resultant coating solution is homogeneous sol, and this is applied onto a substrate by a coating method to be described below, whereby a porous colorant receiving layer having a three-dimensional network structure can be formed. In the method for the above-mentioned dispersing treatment, various known dispersing machines can be used, examples of which include a high-speed rotation dispersing machine, a medium-stirring type dispersing machine (such as a ball mill and a sand mill), an ultrasonic dispersing machine, a colloid mill dispersing machine and a high-pressure dispersing machine. It is preferable to use the colloid mill dispersing machine or high-pressure dispersing machine in order to effectively disperse aggregated fine particles, which are produced in the invention.

If necessary, the colorant receiving layer coating solution or first coating solution may include a surfactant, a pH adjuster, an antistatic agent or the like.

The application of the colorant receiving layer coating solution or first coating solution can be performed by contact coating such as bar coating, roll coating, blade coating, screen coating or tampo coating, or non-contact coating such as spray coating, spin coating, curtain coating or dip coating.

Similarly, the application of the second coating solution can be performed by contact or non-contact coating. Preferably, the application is performed by non-contact coating for the following reason: the coating film, obtained from the first coating solution, is cured at the same time that the second coating solution is applied; therefore, when the second coating solution is applied by the contact coating, this solution produces an effect on the cured coating film so that the film is largely warped. It is particularly preferable that the second coating solution is applied by spray coating or spin coating.

When the coating solution is applied by spin coating, the pressure is preferably from 1.013 to 2026 hPa, more preferably from 50.65 to 1013 hPa, and still more preferably from 101.3 to 506.5 hPa. The spreading angle of the spray is preferably from 1 to 120°, more preferably from 10 to 60°, and still more preferably from 20 to 50°. The size of liquid droplets is preferably from 0.1 to 1000 µm, more preferably from 1 to 500 µm, and still more preferably from 10 to 100 µm. The distance of the spray nozzle from the workpiece (information medium) is preferably from 1 to 1000 mm, more preferably from 10 to 200 mm, and still more preferably from 30 to 100 mm. The temperature is preferably from 10 to 40°C, more preferably from 15 to 35°C, and still more preferably from 20 to 30°C. The humidity is preferably from 5 to 70%RH, more preferably from 10 to 40%RH and still more preferably from 20 to 50%RH.

When the application is performed by spin coating, the viscosity of the coating solution is preferably from 0.1 to 10000 mPa·s, more preferably from 1 to 6000 mPa·s, and still more preferably from 10 to 3000 mPa·s. In order to keep the thickness of the first solution (the colorant receiving layer coating solution) or the first coating solution, the viscosity is preferably from 50 to 10000 mPa·s, more preferably from 100 to 6000 mPa·s, and still more preferably from 200 to 3000 mPa·s. The viscosity of the second solution (crosslinking agent solution) or the second coating solution is preferably from 0.1 to 1000 mPa's, more preferably from 1 to 500 mPa's and still more preferably from 2 to 300 mPa·s in order to keep the homogeneity of the coating film. The rotation number is preferably form 10 to 1000 rpm, more preferably from 50 to 600 rpm, and still more preferably from 100 to 400 rpm at the time of dispensing the solution. When the solution is spun off, the rotation number is gradually raised. As for the manner of raising the rotation number, it may be raised stepwise or gradually. Specifically, the rotation number is preferably from 100 to 10000 rpm, more preferably from 200 to 5000 rpm, and still more preferably from 300 to 3000 rpm. Regarding the shape of the nozzle, the length thereof is preferably from 1 to 100 mm, more preferably from 5 to 50 mm, and still more preferably from 10 to 30 mm, and the inner diameter thereof is preferably from 0.1 to 5 mm, more preferably from 0.3 to 3 mm, and still more preferably from 0.5 to 2 mm. The thickness of the nozzle is preferably from 0.1 to 1 mm, and more preferably from 0.2 to 0.5 mm. The nozzle may be set obliquely along the flow. The distance of the nozzle from the workpiece is preferably from 0.5 to 100 mm, more preferably from 1 to 50 mm, and still more preferably from 2 to 20 mm. The temperature is preferably from 10 to 40°C, more preferably from 15 to 35°C, and still more preferably from 20 to 30°C. The humidity is preferably from 5 to 70%RH, more preferably from 10 to 40%RH, and still more preferably from 20 to 50%RH.

After the colorant receiving layer coating solution or the first coating solution is applied, the crosslinking solution or the second coating solution is added to the resultant coating layer. The crosslinking solution or the second coating solution may be added after the colorant receiving layer coating solution or the first coating solution is applied and before the resultant coating layer exhibits a decreasing drying rate. That is, the colorant receiving layer is preferably produced by introducing the boron compound and the mordant after the colorant receiving layer coating solution or the first coating solution is applied and while the resultant coating layer exhibits a constant drying rate.

The wording "before the coating layer exhibits a decreasing drying rate" usually means several minutes immediately after the application of the colorant receiving layer coating solution or the first coating solution. During this time, a constant drying rate is exhibited, which is based on the phenomenon that the solvent content in the coating layer formed by the application of the solution decreases in proportion to time. The time of the constant drying rate is described in Chemical Engineering Handbook (pp.707-712), published by Maruzen Co., Ltd. on October 25, 1980.

As described above, after the colorant receiving layer coating solution or the first coating solution is applied, the solution is dried until the resultant coating layer exhibits a decreasing drying rate. Details of conditions for the drying are described hereinafter.

The colorant receiving layer may be dried by any drying method, examples of which include natural drying (air drying) , hot wind drying, infrared ray or far infrared ray drying, high-frequency wave drying, and oven drying.

In the case of natural drying, the time for drying the first solution (colorant receiving layer coating solution) or the first coating solution is preferably from 0.1 to 10000 seconds, more preferably from 1 to 1000 seconds, and still more preferably from 10 to 500 seconds. The time for drying the second solution (crosslinking agent solution) or the second coating solution is preferably from 1 to 10000 minutes, more preferably from 5 to 1000 minutes, and still more preferably from 10 to 200 minutes. The drying temperature is preferably from 0 to 40°C, more preferably from 10 to 35°C, and still more preferably from 20 to 30°C. The drying humidity is preferably from 10 to 70%RH, more preferably from 20 to 60%RH and still more preferably from 30 to 50%RH.

In the case of hot wind drying, the time for drying the first solution or the first coating solution is preferably from 0.1 to 5000 seconds, more preferably from 1 to 1000 seconds, and still more preferably from 10 to 500 seconds. The drying temperature is preferably from 40 to 200°C, more preferably from 60 to 150°C, and still more preferably from 80 to 130°C. The drying humidity is preferably from 0.01 to 50%RH, more preferably from 0.1 to 30%RH and still more preferably from 1 to 20%RH.

In the case of infrared ray or far infrared ray drying, the time for drying the first solution or the first coating solution is preferably from 0.1 to 1000 seconds, more preferably from 1 to 500 seconds, and still more preferably from 10 to 300 seconds. The time for drying the second solution or the second coating solution is preferably from 1 to 2000 seconds, more preferably from 10 to 1000 seconds, and still more preferably from 30 to 500 seconds. The output is preferably from 10 to 2000 W, more preferably from 50 to 1500 W, and still more preferably from 100 to 1000 W.

Drying conditions in the case of high-frequency wave drying are the same as in the case of infrared ray or far infrared ray drying.

In the case of oven drying, the time for drying the first solution or the first coating solution is preferably from 0.1 to 1000 seconds, more preferably from 1 to 500 seconds, and still more preferably from 10 to 300 seconds. The time for drying the second solution or the second coating solution is preferably from 1 to 2000 seconds, more preferably from 10 to 1000 seconds, and still more preferably from 30 to 500 seconds.

As for the above-mentioned drying conditions, the surface form of the coating film may be rough regardless of whether the time for drying the first coating solution is too short or too long. If the time for drying the second coating solution is too short, the solution is not dried such that the strength of the coating film may not be kept or the ink-absorptivity may deteriorate. If the time is too long, the productivity of the colorant receiving layer may deteriorate or the surface thereof may crack. If the drying temperature is too high (or the output is too high), cracks occur such that the surface form may deteriorate. If the drying temperature is too low, the coating film may not be sufficiently dried. If the humidity is too high, dew condensation occurs such that the surface state may deteriorate. If the humidity is too low, cracks occur such that the surface form may deteriorate.

Examples of the method for adding the crosslinking agent solution before the above-mentioned coating layer exhibits a decreasing drying rate include (1) a method of applying the crosslinking agent solution further onto the coating layer, (2) a method of spraying the crosslinking agent solution with a sprayer or the like, and (3) a method of dipping the substrate on which the coating layer is formed into the crosslinking agent solution.

The coating method for applying the crosslinking agent solution in method (1) may be a known method, examples of which include curtain flow coating, extrusion die coating, air doctor coating, bread coating, rod coating, knife coating, squeeze coating, reverse roll coating, and bar coating. It is preferable to use a method in which a coater is not brought into direct contact with the formed coating layer, such as extrusion die coating, curtain flow coating or bar coating.

The amount of the crosslinking agent solution or the second coating solution which comprises the boron compound and the mordant agent and is added to the colorant receiving layer is generally from 0.01 to 10 g/m², and preferably from 0.05 to 5 g/m² as an amount converted to the amount of the boron compound.

After the crosslinking agent solution or the second coating solution is added, the resultant is generally heated at 40 to 180°C for 0.5 to 30 minutes (preferably at 40 to 150°C for 1 to 20 minutes) for drying and curing.

For example, in the case of using borax or boric acid as the boron compound contained in the crosslinking agent solution or the second coating solution, it is preferable to heat the substrate on which the coating layers are formed at 60 to 100°C for 5 to 20 minutes.

The crosslinking agent solution or the second coating solution may be added at the same time that the colorant receiving layer or the first coating solution is applied.

In this case, the colorant receiving layer can be formed by applying, onto a substrate, the colorant receiving layer coating solution and the crosslinking agent solution, or the first coating solution and the second coating solution simultaneously (multilayer coating) so as to bring the colorant receiving layer coating solution or the first coating solution into contact with the substrate, and then drying and curing the resultant coating layers.

The simultaneous application (multilayer coating) can be performed, for example, by a coating method using an extrusion die coater or a curtain flow coater. After the simultaneous application, the formed coating layers are dried. The drying in this case is performed by heating the coating layers generally at 40 to 150°C for 0.5 to 10 minutes, and preferably at 40 to 100°C for 0.5 to 5 minutes.

For example, when borax or boric acid is used as the boron compound contained in the crosslinking agent solution, it is preferable to heat the coating layers at 60 to 100°C for 5 to 20 minutes.

When the simultaneous application (multilayer coating) is performed using, for example, an extrusion die coater, the two coating solutions, which are simultaneously jetted out, are formed as overlapped layers near the jetting-out port in the extrusion die coater, that is, before the coating solutions are transferred to the substrate. In this state, the coating solutions are formed onto the substrate. When the two coating solutions overlapped before the application are transferred to the substrate, crosslinking reaction is easily generated in the interface between the two solutions. Consequently, near the jetting-out port in the extrusion die coater, the jetted-out two solutions are mixed with each other so that the viscosity thereof may increase. Thus, operation for the application may be hindered. Therefore, when the simultaneous application is performed as described above, it is preferable to perform simultaneous three-layer application by applying the first coating solution (colorant receiving layer coating solution) and the second coating solution comprising the boron compound and the mordant (crosslinking agent solution) in a state where a barrier layer solution comprising a material which does not react with the crosslinking agent (intermediate layer solution) is interposed between the above-mentioned two solutions.

The barrier layer solution may be any solution that can make a liquid film without reacting with the boron compound. Examples thereof include an aqueous solution containing a very small amount of water-soluble resin which does not react with the boron compound, and water. The water-soluble resin is used as a thickener or the like, considering coating property thereof . Examples thereof include polymers such as hydroxypropylmethylcelluloce, methylcellulose, hydroxyethylmethylcellulose, polyvinyl pyrrolidone, and gelatin.

The above-mentioned mordant may be incorporated into the barrier layer solution.

The colorant receiving layer in the first aspect of the invention may be formed by a method of: applying, onto a surface of a substrate, a coating solution obtained by adding the solution comprising the compound(s) represented by formula (1) and/or formula (2) , the polyvinyl alcohol and the boron compound (first solution) to an aqueous dispersion comprising the gas phase process silica and a dispersing agent and then dispersing the solid components again; adding, to the coating layer formed by the application, a solution comprising the boron compound and the mordant (second solution) at the same time that the first solution is applied or before the above-mentioned coating layer exhibits a decreasing drying rate while drying the coating layer; and then curing the coating layers. The pH of the first solution for forming the colorant receiving layer in this method is from 2.5 to 4.0, which exhibits acidity. This method is preferred since the glossiness of the colorant receiving layer and the density of printed images improve.

As the dispersing agent, a cationic polymer can be used. Preferable examples of the cationic polymer include homopolymers made from a monomer having a primary, secondary or tertiary amino group, or a salt thereof, or a quaternary ammonium salt group; and copolymers or condensation polymers made from the monomer and another monomer. It is preferable that these dispersing agents are used in the form of being dissolved in water.

As for the molecular weight of the dispersing agent, the weight-average molecular weight is preferably from 1000 to 200000, and more preferably from 3000 to 60000. If the molecular weight is less than 1000, the dispersibility may be poor. If the molecular weight is more than 200000, the viscosity of the aqueous dispersion may be high. The amount of the dispersing agent added to the gas phase process silica is preferably from 1 to 30%, and more preferably from 3 to 20%. If this amount is less than 1%, the dispersibility may be poor. If the amount is more than 30%, the color density of an image printed in the colorant receiving layer may be lowered, which is unpreferable.

In the preparation of the aqueous dispersion comprising the gas phase process silica and the dispersing agent, it is acceptable to prepare an aqueous dispersion of the gas phase process silica beforehand and then adding this aqueous dispersion to an aqueous solution of the dispersing agent, or adding an aqueous solution of the dispersing agent to an aqueous dispersion of the gas phase process silica, or mixing the two simultaneously. It is also acceptable that the aqueous dispersion of the gas phase process silica is not added but the gas phase process silica in a powdery form is added to an aqueous solution of the dispersing agent, described above.

After the gas phase process silica and the dispersing agent are mixed, a dispersing machine is used to granulate the mixture solution, whereby an aqueous dispersion having an average particle size of 50 to 300 nm can be obtained. Examples of the dispersing machine used to obtain the aqueous dispersion include various known dispersing machines such as a high-speed rotation dispersing machine, a medium stirring type dispersing machine (such as a ball mill or a sand mill), an ultrasonic dispersing machine, a colloid mill dispersing machine, and a high-pressure dispersing machine. A colloid mill dispersing machine or a high-pressure dispersing machine is preferable to effectively disperse aggregated fine particles.

The solvent which can be used in the respective application steps may be water, an organic solvent or a mixture solvent thereof. Examples of this organic solvent which can be used in the application steps include alcohols such as methanol, ethanol, n-propanol, iso-propanol, and methoxypropanol, ketones such as acetone and methyl ethyl ketone, tetrahydrofuran, acetonitrile, ethyl acetate, and toluene.

After the colorant receiving layer is formed on the substrate, for example, a super calendar, a gloss calendar or the like is used to pass the colorant receiving layer through a roll nip with heat and pressure so as to be subjected to calendar treatment. In this way, surface smoothness, glossiness, transparency and coating film strength thereof can be improved. However, the calendar treatment may cause a fall in the porosity (that is, a fall in ink-absorptivity). It is therefore necessary to set conditions for minimal fall in the porosity.

In the case of performing the calendar treatment, the roll temperature is preferably from 30 to 150°C, and more preferably from 40 to 100°C.

The linear pressure between the rolls at the time of the calendar treatment is preferably from 50 to 400 kg/cm, and more preferably from 100 to 200 kg/cm.

In the case of ink-jet recording, it is necessary that the colorant receiving layer has a layer thickness capable of absorbing all ink droplets. It is therefore necessary to determine the layer thickness of the colorant receiving layer in connection with the porosity of the layer. When the ink amount and the porosity are, for example, 8 nL/mm² and 60%, respectively, it is necessary that the layer thickness is about 1 µm or more.

Taking the above point into account, in the case of ink-jet recording, the layer thickness of the colorant receiving layer is preferably from 1 to 200 µm, more preferably from 5 to 100 µm, and still more preferably from 10 to 60 µm.

As for the diameters of the voids in the colorant receiving layer, the median diameter thereof is preferably from 0.005 to 0.030 µm, and more preferably from 0.01 to 0.025 µm.

The porosity and the void median diameter can be measured with a mercury porosimeter (trade name: Poresizer 9320-PC2, manufactured by Shimadzu Corp.).

The colorant receiving layer preferably has excellent transparency. Regarding the index thereof, the haze value obtained when the colorant receiving layer is formed on a transparent film support is preferably 30% or less, and more preferably 20% or less.

The haze value can be measured with a haze meter (trade name: HGM-2DP, Suga Test Instruments Co., Ltd.).

As described above, the colorant receiving layer has fine particles, polyvinyl alcohol, a boron compound and a mordant, thereby making it possible to suppress dry shrinkage of the colorant receiving layer when a porous structure is formed therein without lowering other ink receiving performances, prevent cracks in the layer, and further improve adhesiveness between the substrate and the colorant receiving layer. Moreover, when the colorant receiving layer contains gas phase process silica to have a three-dimensional network structure having a porosity of 50 to 80%, the layer exhibits good ink-absorptivity. Thus, an image with high resolution and high density can be formed, and blurring with the passage of time under high temperature in a high humidity environment can be suppressed. Additionally, the formed image has excellent ink receiving performances such as high light fastness and high water resistance.

The information medium of the invention can exhibit a glossiness of 30% or more at 60°. The glossiness can be measured with a digital variable gloss meter (trade name: UGV-50DP, manufactured by Suga Test Instruments Co., Ltd.) or the like.

As described above, the colorant receiving layer in the information medium of the invention, which is different from any colorant receiving layer made from ultraviolet ray curable resin, makes it possible to decrease the necessary amount of ultraviolet rays radiated onto the information medium having this layer, and improve recording properties such as jitter.

When any ink-jet recording sheet is bent by a strong force, defects such as cracks occur in the surface thereof. However, in the information medium of the invention, its substrate, which will be described later, is thicker than any ordinary ink-jet recording sheet. Thus, the medium has strong resistance against stress from the outside, such as bending force.

### [Undercoat Layer]

In the information medium of the first aspect of the invention, an undercoat layer having a diffusion reflectance of 10% or more is formed below the colorant receiving layer. By forming such an undercoat layer, a photographic property image quality, like an image quality on photographic paper, can be improved. The diffusion reflectance of the undercoat layer needs to be 10% or more, preferably 50% or more, and more preferably 80% or more. By making the undercoat layer white, such advantageous effects that ordinary photographic paper has can be obtained. Coloring the undercoat layer can give a distinctive impression.

In the information medium of the second aspect of the invention, it is preferable to form an undercoat layer below its colorant receiving layer.

When an undercoat layer having high opacity is formed, the information medium has diffusivity similar to that of paper so as to give an improved image quality. In particular, forming a white undercoat layer can make color reproducibility good. When the undercoat layer in the invention is made to have high glossiness, the image to be obtained is finished like a glossy photograph. When the undercoat layer is made to have high matting property, the image to be obtained is finished like a mat photograph. When various colors are used in the undercoat layer, an image having various impressions can be formed. When the undercoat layer is fluorescent, a fluorescent image can be formed. The method for forming such an undercoat layer is not limited. From the viewpoint of productivity thereof, it is preferable to make radial ray curable resin into the undercoat layer by screen printing. The radial ray curable resin is resin cured by electromagnetic rays such as ultraviolet rays, electron beams, X-rays, y-rays, or infrared rays. Among these examples, ultraviolet rays and electron beams are preferable as the radial rays.

The thickness of the undercoat layer is preferably from 0.1 to 100 µm, more preferably 1 to 50 µm, and most preferably from 3 to 20 µm.

### [Intermediate Layer]

When the undercoat layer is formed below the colorant receiving layer in the information medium of the invention, an intermediate layer may be formed between the colorant receiving layer and the undercoat layer. By making the intermediate layer as a layer having high ink-absorptivity, the amount of ink which can be received increases. Thus, when an image is printed, the color density and image quality thereof can be improved. Alternatively, an intermediate layer may be formed between the undercoat layer and the substrate. In this case, the adhesiveness between the undercoat layer and the substrate can be improved or the warp of the whole information medium can be adjusted.

The thickness of the intermediate layer is preferably from 0.1 to 100 µm, more preferably from 1 to 50 µm, and most preferably from 3 to 20 µm.

### [Surface Layer]

In the information medium of the invention, a surface layer may be formed on the colorant receiving layer. The surface layer enables improvements in surface strength and storability of a printed image. It is necessary that the surface layer has a nature in which the layer can receive ink or cause ink to permeate rapidly.

The thickness of the surface layer is preferably from 0.01 to 100 µm, more preferably from 0.1 to 10 µm, and most preferably from 0.5 to 5 µm.

The following describes the substrate and the respective layers used in the invention in more detail. Layer structures and materials thereof are not limited, and mere examples thereof are described hereinafter.

### Substrate

The substrate to be used can be arbitrarily selected from various materials which have been used as substrate material of conventional optical recording media.

Specific examples thereof include glass; polycarbonate; acrylic resins such as polymethyl methacrylate; vinyl chloride resins such as polyvinyl chloride and vinyl chloride copolymer; epoxy resins; amorphous polyolefin; polyesters; and metals such as aluminum. If desired, these may be used together.

Among the above-mentioned materials, amorphous polyolefin and polycarbonate are preferable, and polycarbonate is particularly preferable from the viewpoint of humidity resistance, dimensional stability and low cost. The thickness of the substrate is preferably from 0.5 to 1.2 mm, and more preferably from 0.6 to 1.1 mm.

In the substrate, guide grooves for tracking or irregularities (pregrooves) for representing data signals such as address signals are made.

In the case of DVD-Rs or DVD-RWS, the track pitch of the pregrooves is preferably from 300 to 900 nm, more preferably from 350 to 850, and still more preferably from 400 to 800 nm.

If the track pitch is less than 300 nm, it is difficult to form the pregrooves correctly and further a problem of crosstalk may occur. If the track pitch is more than 900 nm, a problem of reduced recording density may occur.

The depth of the pregrooves (groove depth) is preferably from 100 to 160 nm, more preferably from 120 to 150 nm, and still more preferably from 130 to 140 nm.

If the depth is less than 100 nm, sufficient recording modulation degree may not be obtained. If the depth is more than 160 nm, the reflectance may greatly fall.

The half value width of the pregrooves is preferably from 200 to 400 nm, more preferably from 230 to 380 nm, and still more preferably from 250 to 350 nm.

If the half value width is less than 200 nm, the grooves cannot be sufficiently transferred when the grooves are formed, or the error rate of recording may increase. If the half value width is more than 400 nm, pits formed at the time of recording are widened such that crosstalk may occur or sufficient modulation degree cannot be obtained.

In the case of CD-Rs or CD-RWs, the track pitch of the pregrooves is preferably from 1.2 to 2.0 µm, more preferably from 1.4 to 1.8 µm, and still more preferably from 1.55 to 1.65 µm.

The depth of the pregrooves (groove depth) is preferably from 100 to 250 nm, more preferably from 150 to 230 nm, and still more preferably from 170 to 210 nm.

The half value width of the pregrooves is preferably from 400 to 650 nm, more preferably from 480 to 600 nm, and still more preferably from 500 to 580 nm.

The critical significance of the numerical ranges of the pregrooves are the same as in the case of the above-mentioned DVD-Rs or DVD-RWs.

### Recording Layer

In the case of CD-Rs or DVD-Rs, the recording layer is formed by dissolving a dye as a recording material, together with a binder and the like, into a suitable solvent to prepare a coating solution, applying this coating solution onto a surface of the substrate wherein the pregrooves are made by spin coating to form a coating film, and then drying the film.

The temperature when spin coating is used is preferably 23°C or higher, and more preferably 25°C or higher. The upper limit of the temperature is not particularly limited. However, the upper limit needs to be lower than the flash point of the solvent and is preferably 35°C.

If the temperature is lower than 23°C, the solvent is slowly dried that a target dye film thickness (recording layer thickness) cannot be obtained, or the time for applying and drying the coating solution may become long. Thus, productivity of the information media may fall.

Examples of the dye include cyanine, oxonol, metal complex, azo and phthalocyanine dyes. Phthalocyanine dyes are particularly preferable.

Dyes described in the following are preferable used: JP-A Nos. 4-74690, 8-127174, 11-53758, 11-334204, 11-334205, 11-334206, 11-334207, 2000-43423, 2000-108513, and 2000-158818.

Examples of the solvent in the coating solution include esters such as butyl acetate, ethyl lactate and 2-methoxyethyl acetate; ketones such as methyl ethyl ketone, cyclohexanone and methyl isobutyl ketone; chlorinated hydrocarbons such as dichloromethane, 1,2-dichloroethane and chloroform; amides such as dimethylformamide; hydrocarbons such as methylcylohexane; ethers such as tetrahydrofuran, ethyl ether and dioxane; alcohols such as ethanol, n-propanol, isopropanol, n-butanol and diacetone alcohol; fluorine-containing solvents such as 2,2,3,3-tetrafluoropropanol; and glycol ethers such as ethylene glycol monomethyl ether, ethylene glycol monoethyl ether and propylene glycol monomethyl ether.

The above-mentioned solvents may be used alone or in combination of two or more thereof, taking into account the solubility of the recording material therein. Depending on the purpose, it is acceptable to add, to the coating solution, various additives such as an antioxidant, a UV absorbent, a plasticizer, and a lubricant.

When a binder is used in the recording layer, examples of the binder include natural organic polymer materials such as gelatin, cellulose derivatives, dextrin, rosin, and rubber; and synthetic organic polymers such as hydrocarbon resins (such as polyethylene, polypropylene, polystyrene, and polyisobutylene), vinyl resins (such as polyvinyl chloride, polyvinylidene chloride, and polyvinyl chloride/polyvinyl acetate copolymer) , acrylic resins (such as polymethyl acrylate and polymethyl methacrylate), polyvinyl alcohol, chlorinated polyethylene, epoxy resin, butyral resin, rubber derivatives, and initial condensates of thermosetting resins (such as phenol/formaldehyde resin). When the binder is also used as a material for the recording layer, the mass of the used binder is generally 0.01 to 50 times the mass of the recording material, and preferably 0.1 to 5 times the mass. The concentration of the recording material in the thus-prepared coating solution is generally from 0.01 to 10% by mass, and preferably from 0.1 to 5% by mass.

As the method for applying the recording layer, spin coating is used as described above. A device and others which are used at this time may be conventionally known ones.

The recording layer may be made of a single layer or plural sub-layers. The thickness of the recording layer is generally from 20 to 500 nm, preferably from 30 to 300 nm, and more preferably from 50 to 100 nm.

Any anti-fading agent may be incorporated into the recording layer in order to improve the light fastness of this layer.

As the anti-fading agent, a singlet oxygen quencher is generally used. The single oxygen quencher which can be used may be any one described in publications such as known patent specifications.

Specific examples thereof are described in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995 and 4-25492, JP-B Nos. 1-38680 and 6-26028, German Patent No. 350399, and Journal of the Chemical Society of Japan, Oct. 1992, page 1141.

The amount of the used anti-fading agent, such as the singlet oxygen quencher, is usually from 0.1 to 50% by mass, preferably form 0.5 to 45% by mass, more preferably from 3 to 40% by mass, and still more preferably from 5 to 25% by mass of the dye.

In the case of CD-RWs or DVD-RWs, it is preferable that the recording layer is made of a phase-change type optical recording material made of at least Ag, Al, Te and Sb, which can turn into at least two states, that is, a crystal state and an amorphous state. This recording layer can be formed by any known method.

If necessary, a known dielectric layer is formed on this recording layer. Light Reflecting Layer

After the recording layer is formed, a light reflecting material is subjected to vapor-deposition, sputtering or ion-plating onto the recording layer, thereby forming a light reflecting layer. When the light reflecting layer is formed, a mask is usually used to adjust an area where the light reflecting layer is formed.

In the light reflecting layer, a light reflecting material having a high reflectance to a laser ray is used. The reflectance is preferably 70% or more.

Examples of the light reflecting material having a high reflectance include metals and semimetals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn and Bi; and stainless steel. These light reflecting materials may be used alone or in combination of two or more thereof, or in the form of alloy. Among these examples, preferable are Cr, Ni, Pt, Cu, Ag, Au, Al and stainless steel. Particularly preferable are Au, Ag, Al and alloy thereof. More preferable are Au, Ag and alloy thereof.

The thickness of the light reflecting layer is generally from 10 to 300 nm, and preferably from 50 to 200 nm. Protective Layer and Protective Substrate

After the light reflecting layer is formed, a protective layer is formed on the light reflecting layer.

The reflecting layer is formed by spin coating. By using spin coating, the protective layer can be formed without causing damages (such as dissolution of the dye, and chemical reaction between the dye and the protective layer material) to the recording layer. The rotation number at the time of spin coating is preferably from 50 to 8000 rpm, and more preferably from 100 to 5000 rpm in order to make the layer uniform and prevent damages to the recording layer.

When radial ray curable resin (ultraviolet ray curable resin) is used in the protective layer, ultraviolet rays are radiated onto the protective layer from an ultraviolet ray radiating lamp (metal halide lamp) after formation of the protective layer by spin coating, so as to set the ultraviolet ray curable resin.

In order to remove unevenness in the thickness of the formed protective layer, the resin may be appropriately allowed to stand for a given amount of time or may be subjected to some other operation before the resin is cured.

The protective layer prevents invasion of water or generation of scratches. The material of the protective layer is preferably radial ray curable resin, visible ray curable resin, thermosetting resin, silicon dioxide or the like. Radial ray curable resin is particularly preferable. Examples of the radial ray curable resin include an ultraviolet ray curable resin "SD-640" (trade name) manufactured by Dainippon Ink & Chemicals, Inc. The following products can also be used: "SD-347" and "SD-694" manufactured by Dainippon Ink & Chemicals, Inc., and "SKCD 1051" manufactured by SKC Co. The thickness of the protective layer is preferably from 1 to 200 µm, and more preferably from 50 to 150 µm.

In the layer structure wherein the protective layer is used as a laser ray path, it is necessary that the protective layer has transparency. "Transparency" referred to herein means that the protective layer has such transparency that the layer transmits recording light and reproducing light (transmittance: 90 or more).

In the case of DVD-Rs or DVD-RWs, an adhesive layer made of ultraviolet ray curable resin or the like and a substrate as a protective substrate (thickness: about 0.6 mm, and material thereof: the same as for the above-mentioned substrate) are laminated instead of the protective layer.

That is, after the light reflecting layer is formed, an ultraviolet ray curable resin ("SD 640" manufactured by Dainippon Ink & Chemicals, Inc., or the like) is applied by spin coating, so as to have a thickness of 20 to 60 µm. In this way, the adhesive layer is formed. For example, a polycarbonate substrate (thickness: 0.6 mm) as the protective substrate is put onto the formed adhesive layer, and then ultraviolet rays are radiated onto the substrate to cure the ultraviolet ray curable resin. In this way, the protective substrate is adhered to the light reflecting layer.

As described above, an information medium is produced which is made of a lamination comprising, on the substrate, the recording layer, the light reflecting layer, and the protective layer or the protective substrate (dummy substrate) with the adhesive layer.

The information medium of the invention can be applied to an information medium having a smaller track pitch than conventional DVDs, wherein information is recorded or reproduced with a laser ray having a smaller wavelength than laser rays used in the DVDs by appropriately determining the track pitch of the pregrooves made in the substrate, the material of the recording layer, or the like.

With respect to the thickness of the information medium of the invention, the lower limit thereof is preferably 0.3 mm, more preferably 0.5 mm, and still more preferably 0.7 mm. The upper limit thereof is preferably 100 mm, more preferably 20 mm, and still more preferably 5 mm. If the medium is too thin, a defect may occur when the medium is bent. If the medium is too thick, the removable property may be poor.

### EXAMPLES

The invention will be described by the following examples hereinafter. However, the invention is not limited to these examples. The word "part(s)" and the symbol "%" represent "part(s) by mass" and "% by mass", respectively.

### Example 1

### <<Production of a disc substrate>>

A polycarbonate resin (trade name: Panlight AD5503, manufactured by Teijin Ltd.) was poured into an injection molding machine having therein a stamper formed to have a given groove form at a given track pitch, and then the resin was molded at a temperature of 115°C to produce a disc resin substrate made of the polycarbonate resin. The resultant disc resin substrate had a diameter of 120 mm and a thickness of 1.2 mm. In a surface thereof, spiral grooves (pregrooves) were made. The track pitch of the grooves was 1.6 µm and the groove width thereof was 500 nm. The groove depth was 180 nm.

2.5 g of a cyanine dye represented by the following structural formula was dissolved into 100 mL of 2,2,3,3-tetrafluoropropanol to prepare a coating solution to form a recording layer:

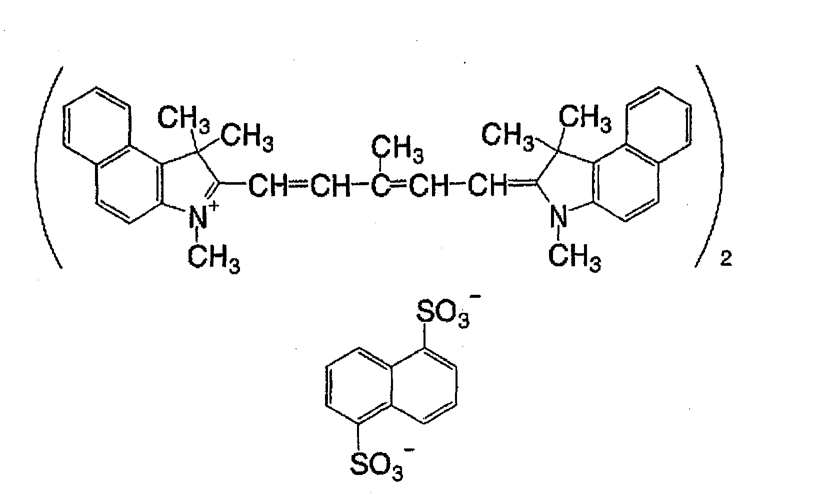

This coating solution was applied onto the surface, in which the pregrooves were made, of the disc polycarbonate substrate obtained as above by spin coating, so as to form a colorant recording layer (thickness: 190 nm (the groove portion), and 110 nm (the land portion)).

Next, a DC magnetron sputtering machine was used to sputter Ag onto the dye recording layer, so as to form a reflecting layer made of Ag and having a thickness of about 120 nm. An ultraviolet ray curable resin (trade name: SD 318, manufactured by Dainippon Ink & Chemicals, Inc.) was applied onto the reflecting layer by spin coating while the rotation number was changed from 300 to 4000 rpm. After the application, ultraviolet rays were radiated onto the ultraviolet ray curable resin, using a high-pressure mercury lamp, to form a protective layer having a thickness of 5 µm. Through the above-mentioned steps, a CD-R type information medium (optical disc) composed of the substrate, the dye recording layer, the reflecting layer and the protective layer was produced.

Next, an ultraviolet ray curable ink (trade name: SSD F27, manufactured by Dainippon Ink & Chemicals, Inc.) was printed onto the substrate surface opposite to the protective layer side by screen printing. After the printing, a high-pressure mercury lamp was used to radiate ultraviolet rays onto the ink. In this way, the ink was set to form a white layer (undercoat layer) having a thickness of 10 µm.

Next, the following steps were performed to form a colorant receiving layer on the white layer.

### -Preparation of Coating Solution for Colorant Receiving Layer (First Coating Solution)-

(1) Gas phase process silica fine particles and (2) deionized water, each of which was a component in a composition to be described below, were mixed and then a high-speed rotating type colloid mill (Cleamix, manufactured by M Technique Co., Ltd.) was used to disperse the fine particles at a rotation number of 10000 rpm for 20 minutes. Thereafter, (3) polyoxyethylene lauryl ether, (4) ammonia water, (5) 9% aqueous solution of polyvinyl alcohol, and (6) diethylene glycol monobutyl ether, each of which was a component in the composition to be describe below were added thereto. Further, the solid components were dispersed under the same conditions as described above, so as to prepare a coating solution A for colorant receiving layer.

The mass ratio between the silica fine particles and the water-soluble resin (PB ratio/(1):(5)) was 3.5:1, and the pH of the coating solution A for colorant receiving layer was 9.5, which exhibited alkalinity.

### [Composition of the coating solution A for colorant receiving layer]

| | |
|---|---|
| (1) gas phase process silica fine particles (inorganic pigment fine particles) (average primary particle size: 7 nm, trade name: Aerosil 300, manufactured by Nippon Aerosil Co., Ltd.) | 9.9 parts |
| (2) deionized water | 72.6 parts |
| (3) polyoxyethylene lauryl ether (surfactant) (trade name: Emulgen 109P (10%), manufactured by Kao Corp . , HLB value: 13.6)] | 7.2 parts |
| (4) 17 g/L ammonia water (pH adjuster) | 5.3 parts |
| (5) 9% aqueous solution of polyvinyl alcohol (water-soluble resin) (trade name: PVA420, manufactured by Kuraray Co., Ltd., saponification degree: 81.8%, polymerization degree: 2000) | 31.4 parts |
| (6) diethylene glycol monobutyl ether (compound represented by formula (1)) | 0.6 part |

### -Formation of Colorant Receiving Layer-

The surface of the white layer of the information medium was subjected to corona discharge treatment, and then a bar coater was used to apply the coating solution A for colorant receiving layer as described above onto the surface of the white layer at an application amount of 100 mL/m². The resultant coating layer was dried with a hot wind drier at 80°C (wind speed: 3 to 8 m/sec) to make the solid concentration in the coating layer into 20%. The coating layer exhibited a constant drying rate during this period. Immediately after this, a bar coater was used to apply a crosslinking agent solution A (second coating solution) having a composition to be described below onto the applied coating solution A for colorant receiving layer. Furthermore, the resultant was dried at 80°C for 5 minutes, thereby producing an information medium of Example 1, wherein a colorant receiving layer having a dry film thickness of 30 µm was formed.

### [Composition of the crosslinking agent solution A]

· 6% boric acid (crosslinking agent) 25 parts
· 20% aqueous solution of PAS-F 5000
   (mordant, manufactured by Nitto Boseki Co., Ltd.) 7.15 parts
· deionized water 68.98 parts
· ammonium chloride (surface pH adjuster) 0.2 part
· 25% ammonia water (pH adjuster) 1.67 part
· polyoxyethylene lauryl ether (surfactant)
   (trade name: Emulgen 109P (10%), manufactured by Kao Corp., HLB value: 13.6) 2 parts

### Example 2

Injection molding was used to make a polycarbonate substrate wherein a spiral groove (land) and an LPP were formed in a surface (thickness: 0.6 mm, outer diameter: 120 mm, inner diameter: 15 mm) from polycarbonate (trade name: Panlight AD5503, manufactured by Teijin Ltd.). The groove depth, the groove width and the groove pitch thereof were 140 nm, 310 nm and 740 nm, respectively.

One gram of a mixture dye wherein the following oxonol dye (A) and oxonol dye (B) were mixed at a ratio of 65:35 were dissolved in 100 ml of 2,2,3,3-tetrafluoropropanol, so as to prepare a coating solution to form a recording layer:

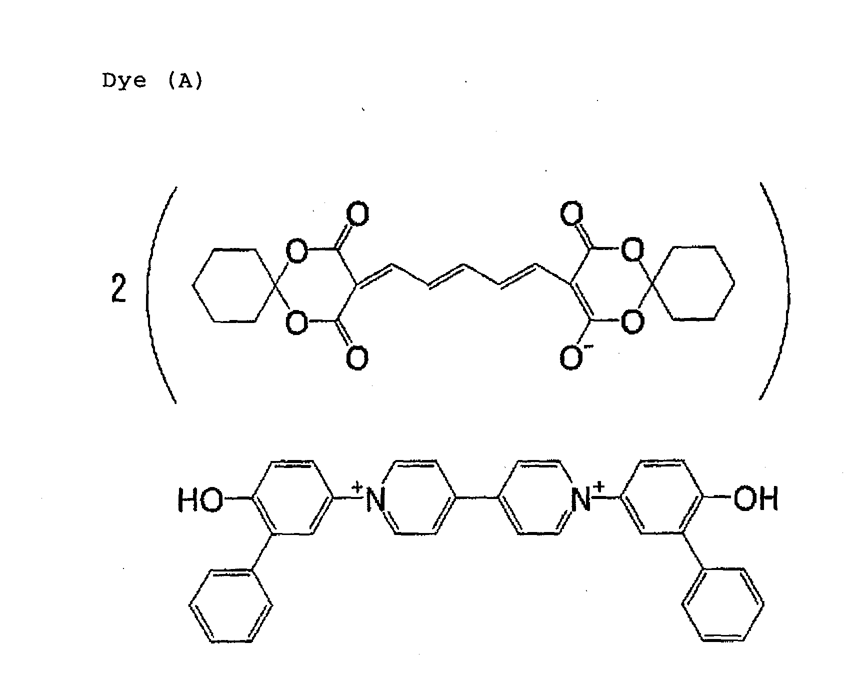

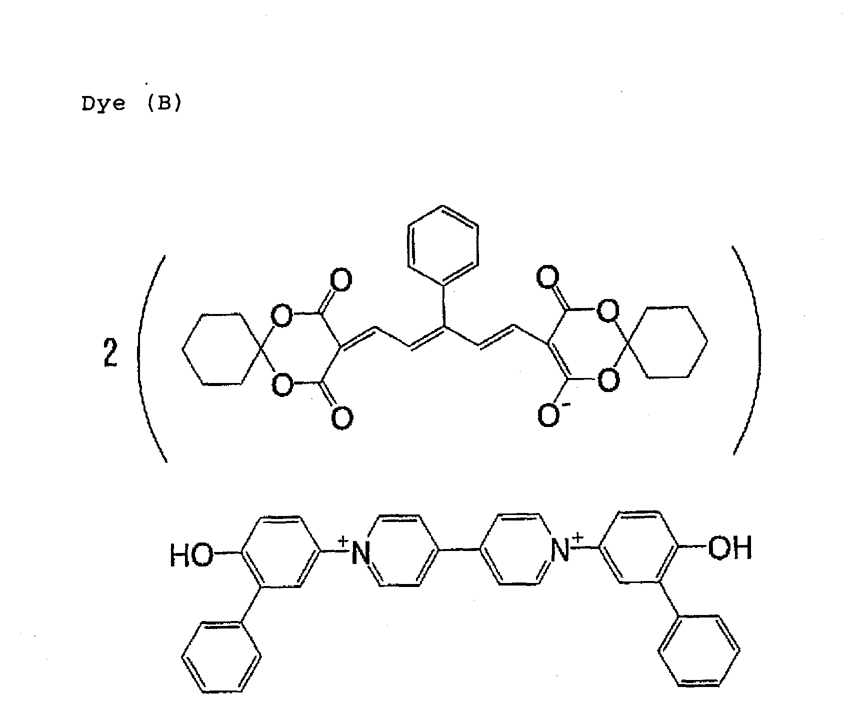

This recording layer forming coating solution was applied onto the resultant groove surface of the substrate by spin coating while the rotation number was changed from 300 to 3000 rpm. The resultant was dried to form a recording layer. A cross section of the recording layer was observed with an SEM to measure the thickness thereof. As a result, the thickness in the groove was 150 nm, and the thickness in the land portion was 110 nm.

Next, DC sputtering in argon atmosphere was used to form a reflecting layer made of Ag and having a thickness of about 150 nm on the recording layer. The pressure in the chamber was 0.5 Pa.

An ultraviolet ray curable resin (trade name: SD-318, manufactured by Dainippon Ink & Chemicals, Inc.) was dispensed in a ring form onto the reflecting layer, and then a disc protective substrate (diameter: 120 mm, thickness: 0.6 mm) made of polycarbonate and prepared separately was adhered, through the ultraviolet ray curable resin, to the reflecting layer so as to make the centers thereof consistent with each other. The resultant was rotated at a rotation number of 5000 rpm for 3 seconds to spread an ultraviolet ray curable resin (trade name: SD 640, manufactured by Dainippon Ink & Chemicals, Inc.) onto the whole surface and spin off excessive ultraviolet ray curable resin. When the ultraviolet ray curable resin was spread onto the whole surface, ultraviolet rays were radiated thereto from a high-pressure mercury lamp to cure the ultraviolet ray curable resin, thereby adhering the substrate on which the recording layer and the reflecting layer were formed to the disc protective substrate. The thickness of the layer for the adhesion was 25 µm, and the adhesion was attained without incorporating air bubbles into this layer.

Next, a white layer and a colorant receiving layer were formed on the surface of the disc protective substrate in the same way as in Example 1, so as to produce an information medium of Example 2.

### Example 3

An information medium of Example 3 wherein a colorant receiving layer having a dry film thickness of 30 µm was formed was produced in the same way as in Example 1, except that the coating solution A for colorant receiving layer was applied in an application amount of 150 mL/m² by spray coating and the crosslinking agent solution A was applied by spray coating.

### Example 4

An information medium of Example 4 was produced in the same way as in Example 3 except that the crosslinking agent solution A (second coating solution) was applied by spin coating.

### Example 5

In the same way as in Example 2, a substrate wherein a recording layer and a reflecting layer were formed was adhered to a disc protective substrate.

Next, in the same way as in Example 3, a white layer and a colorant receiving layer were formed on the surface of the disc protective substrate, to produce an information medium of Example 5.

### Comparative Example 1

An information medium of Comparative Example 1 was produced in the same way as in Example 1 except that the colorant receiving layer was changed to a layer obtained by screenprinting an ultraviolet ray curable resin (trade name: UV SP 81019B, manufactured by Teikoku Ink Mfg. Co., Ltd.) and then curing the resin with ultraviolet rays.

### Comparative Example 2

An information medium of Comparative Example 2 was produced in the same way as in Example 2 except that the colorant receiving layer was changed to a layer obtained by screenprinting an ultraviolet ray curable resin (trade name: UV SP 81019B, manufactured by Teikoku Ink Mfg. Co., Ltd.) and then curing the resin with ultraviolet rays.

### Comparative Example 3

An information medium of Comparative Example 3 was produced in the same way as in Example 3 except that the colorant receiving layer coating solution (first coating solution) was applied by spray coating and completely air-dried without applying any crosslinking agent solution.

### <Performance evaluation>

The information media of Examples 1 to 5 and Comparative Examples 1 to 3 as described above were evaluated as follows.

### [Printing]

An ink-jet printer (trade name: PM-970C, manufactured by Seiko Epson Corp.) was used to print images on the colorant receiving layers of the information media of Examples 1 to 4 and Comparative Examples 1 to 3. The information media of Examples 1 to 4 had high resolution and exhibited fine feel of material. Images of hair were able to be vividly printed. The printed images were subjected to functional evaluation by naked eyes of 10 persons. As a result, the images were more beautiful than conventional images.

On the other hand, the information media of Comparative Examples 1 to 3 had bad print quality and low resolution, and exhibited no fine feel of material.

### [Warp amount]

With respect to the information media of Examples 3 to 5 and Comparative Examples 1 and 3, the warp amounts thereof were measured with a DLD 4000 manufactured by Japan EM. The results are shown in Table 1.

### [Jitter]

Regarding the information media of Examples 3 to 5 and Comparative Examples 1 and 3, the recording and reproducing properties thereof were evaluated with a disc evaluating machine OMT manufactured by Pulstec Industrial Co., Ltd. The results are shown in Table 1.

**Table 1**

| | 3T jitter (ns) | Warp amount (µm) |
|---|---|---|
| Example 3 | 29 | 100 |
| Example 4 | 29 | 100 |
| Example 5 | 29 | 120 |
| Comparative Example 1 | 31 | 300 |
| Comparative Example 3 | 30 | 170 |

It can be understood from Table 1 that the information media of Examples 3 to 5 each exhibited a small warp amount and good recording property (jitter). On the other hand, the information media of Comparative Examples 1 and 3 did not give satisfactory results on the warp amount and the jitter. In particular, the colorant receiving layer of the information medium of Comparative Example 3, wherein only one liquid was used to form its colorant receiving layer, had a very small surface strength.

## Claims

1. An information medium comprising a substrate having successively disposed thereon an undercoat layer and a colorant receiving layer,
wherein the colorant receiving layer comprises at least fine particles, polyvinyl alcohol, a boron compound and a mordant, and
the diffusion reflectance of the undercoat layer is 10% or more.

2. An information medium according to claim 1, wherein the fine particles are made of at least one selected from gas phase silica, pseudo-boehmite, and aluminum oxide.

3. An information medium according to claim 1 or 2, wherein the colorant receiving layer further comprises a compound represented by the following formula (1) and/or a compound represented by the following formula (2):
RO(CH₂CH₂O )ₙH Formula (1)
wherein R represents a saturated hydrocarbon group having 1 to 12 carbon atoms, an unsaturated hydrocarbon group having 1 to 12 carbon atoms, a phenyl group or an acyl group, and n is an integer of 1 to 3, and
RO(CH₂CH(CH₃)O)ₙH Formula (2)
wherein R represents a saturated hydrocarbon group having 1 to 12 carbon atoms, an unsaturated hydrocarbon group having 1 to 12 carbon atoms, a phenyl group or an acyl group, and n is an integer of 1 to 3.

4. An information medium according to claim 3, wherein the compound represented by formula (1) and the compound represented by formula (2) are water-soluble.

5. An information medium according to claim 3 or 4, wherein R represents a saturated hydrocarbon group having 1 to 4 carbon atoms in formula (1) and formula (2).

6. An information medium according to any one of claims 3 to 5, wherein the colorant receiving layer is obtained by: applying a coating solution comprising the compound represented by formula (1) and/or the compound represented by formula (2), the fine particles, and the polyvinyl alcohol; adding, to the coating layer formed by the above-mentioned application, a solution comprising the boron compound and the mordant at the same time that the coating solution is applied or before the coating layer exhibits a decreasing drying rate while drying the coating layer; and subsequently curing the coating layer.

7. An information medium according to any one of claims 3 to 5, wherein the colorant receiving layer is obtained by: applying a coating solution obtained by adding a solution comprising the compound represented by formula (1) and/or the compound represented by formula (2), the polyvinyl alcohol and the boron compound to an aqueous dispersion comprising the fine particles and a dispersing agent and then dispersing the solid components again; adding, to the coating layer formed by the application, a solution comprising the boron compound and the mordant at the same time that the above-mentioned coating solution is applied or before the coating layer exhibits a decreasing drying rate while drying the coating layer; and subsequently curing the coating layer.

8. An information medium according to any one of claims 1 to 7, which has a surface glossiness of 30% or more at 60°.

9. An information medium comprising a substrate having disposed thereon a colorant receiving layer,
wherein the colorant receiving layer is formed by successively applying a first coating solution and a second coating solution which are different from each other.

10. An information medium according to claim 9, wherein the method for applying the second coating solution is a non-contact coating method.

11. An information medium according to claim 10, wherein the non-contact coating method is spray coating or spin coating.

12. An information medium according to any one of claims 9 to 11, wherein the first coating solution comprises fine particles and polyvinyl alcohol, and the second coating solution comprises a boron compound and a mordant.

13. An information medium according to claim 12, wherein the first coating solution further comprises a compound represented by the following formula (1) and/or a compound represented by the following formula (2):
RO(CH₂CH₂O)ₙH Formula (1)
wherein R represents a saturated hydrocarbon group having 1 to 12 carbon atoms, an unsaturated hydrocarbon group having 1 to 12 carbon atoms, a phenyl group or an acyl group, and n is an integer of 1 to 3, and
RO(CH₂CH (CH₃) O)ₙH Formula (2)
wherein R represents a saturated hydrocarbon group having 1 to 12 carbon atoms, an unsaturated hydrocarbon group having 1 to 12 carbon atoms, a phenyl group or an acyl group, and n is an integer of 1 to 3.

14. An information medium according to claim 12 or 13, wherein the fine particles are made of at least one selected from gas phase silica, pseudo-boehmite, and aluminum oxide.

15. An information medium according to claim 13 or 14, wherein the compound represented by formula (1) and the compound represented by formula (2) are water-soluble.

16. An information medium according to any one of claims 13 to 15, wherein R represents a saturated hydrocarbon group having 1 to 4 carbon atoms in formula (1) and formula (2).

17. An information medium according to any one of claims 9 to 16, wherein the colorant receiving layer is obtained by: applying the first coating solution; adding, to the coating layer formed by the application, the second coating solution at the same time that the first coating solution is applied or before the coating layer exhibits a decreasing drying rate while drying the coating layer; and subsequently curing the coating layer.
